# EUROPÄISCHE PATENTSCHRIFT

(11) **EP 2 826 344 B1**
(45) Veröffentlichungstag und Bekanntmachung des Hinweises auf die Patenterteilung: **27.06.2018**
(21) Anmeldenummer: 13708407.5
(22) Anmeldetag: 07.03.2013
(51) Int. Cl.: H05G 1/54

(54) **VERFAHREN UND VORRICHTUNG ZUR VORHERSAGE DER LEBENSDAUER EINER RÖNTGENRÖHRE**
METHOD AND DEVICE FOR PREDICTING THE LIFETIME OF AN X-RAY TUBE
PROCÉDÉ ET DISPOSITIF DE PRÉDICTION DE LA DURÉE DE VIE D'UN TUBE À RAYONS X

(30) Priorität: 16.03.2012 DE 102012204138
(43) Veröffentlichungstag der Anmeldung: 21.01.2015
(73) Patentinhaber: Smiths Heimann GmbH, 65205 Wiesbaden (DE)
(72) Erfinder: HESS, Gregor, 65205 Wiesbaden (DE)
(74) Vertreter: Greif, Thomas
(86) Internationale Anmeldenummer: PCT/EP2013/054579
(87) Internationale Veröffentlichungsnummer: WO 2013/135550

(56) Entgegenhaltungen:
- US-A1- 2001 031 036
- US-A1- 2007 189 463
- US-B1- 6 351 517

## Beschreibung

Die Erfindung betrifft ein Verfahren und eine Vorrichtung zur Vorhersage der Lebensdauer eines Röntgengenerators, der bevorzugt Bestandteil eines Röntgenprüfgeräts ist, mit dem Gegenstände zur Überprüfung ihres Inhalts durchstrahlt werden.
Zur Sicherheitskontrolle von Handgepäck und anderen von Personen mitgeführten Gegenständen, beispielsweise auf Flughäfen, werden bekannterweise Prüfanlagen mit Röntgenprüfgeräten verwendet, die zur Erzeugung der Röntgenstrahlen Röntgengeneratoren enthalten.
Die Röntgengeneratoren haben eine endliche Lebensdauer. Bei einem Ausfall müssen sie kurzfristig ausgetauscht werden, damit die Prüfanlage wieder funktionsfähig wird. Da der Ausfall eines Generators in der Regel unerwartet erfolgt, wird für das Herbeischaffen und den Einbau eines Austauschgenerators Zeit benötigt, in der die Röntgenprüfanlage still steht. Ein Verfahren zur Vorhersage der Lebensdauer einer Röntgenröhre ist aus der US2007/0189463 A1 bekannt. Der Erfindung liegt daher die Aufgabe zugrunde, ein Verfahren bereitzustellen, mit dem sich die bei einem Ausfall eines Generators erforderliche Stillstandzeit der Röntgenprüfanlage reduzieren lässt.

Diese Aufgabe wird durch die Merkmale des Patentanspruchs 1 gelöst. Durch Bestimmung der zu erwartenden restlichen Lebensdauer des Röntgengenerators kann rechtzeitig vor einem bevorstehenden Ausfall des Generators gewarnt werden. Im Rahmen einer Fernwartung kann eine Serviceorganisation verständigt werden, der genügend Vorlaufzeit zur Vorbereitung eines Generatoraustauschs verbleibt. So lässt sich die Ausfallzeit der Röntgenanlage reduzieren.
Darüber hinaus lässt sich die Lagerhaltung von Austauschgeneratoren optimieren, und somit lassen sich die Servicekosten reduzieren.
Die abhängigen Patentansprüche enthalten bevorzugte, da besonders vorteilhafte Varianten und Ausgestaltungen der Erfindung.
Bevorzugt enthält die Generatorelektronik eine Komponente, in der die Daten gespeichert werden und die Statistik hinterlegt ist.
Durch Erfassung und Aufzeichnung der Hochspannung der Röntgenröhre, des Targetstroms und / oder der Temperatur der Röntgenröhre lassen sich die für die Lebensdauer besonders relevanten Parameter mitschreiben. Daraus können die thermische Belastung (sowohl die augenblickliche als auch die auf akkumulierte Belastung) und kurzfristige Signalabweichungen, die auf Überschläge hinweisen, direkt abgeleitet werden. Bevorzugt werden aus den Signalabweichungen die Anzahl und / oder die Rate von Überschlägen bestimmt.

Werden auch die Betriebszeiten und die Standby-Zeiten des Generators mit aufgezeichnet, so können mit einer ausreichenden Anzahl von Messungen (Datenlogs) statistische Informationen erarbeitet werden, die für die Lebensdauer einer Röntgenröhre relevant sind.

Bei einem System mit vergleichbaren Komponenten lässt sich das Datenerfassungssystem so ausführen, dass Vergleiche aus einer ausreichenden Anzahl von ausgewerteten Daten aus Beispielmessungen die Erarbeitung von statistischen Informationen ermöglichen, die hinterlegt werden und bei aktuellen Messungen zur Ermittlung der statistischen Restlebenserwartung der Röntgenröhre und / oder sonstiger kritischer Komponenten des Generators ermöglichen.

Nachfolgend wird die Erfindung anhand eines bevorzugten Ausführungsbeispiels näher erläutert.

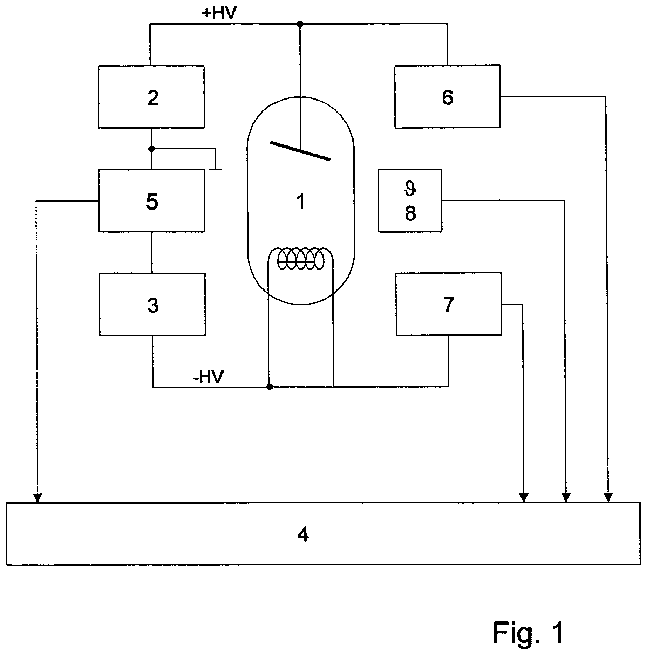

Figur 1 zeigt schematisch den Aufbau eines Röntgengenerators mit einer Röntgenröhre.

Der Röntgengenerator dient zur Erzeugung von Röntgenstrahlen und ist Bestandteil eines Röntgenprüfgeräts, mit dem Gegenstände zur Überprüfung Ihres Inhalts durchstrahlt werden. Derartige Röntgenprüfgeräte werden zur Überprüfung von Handgepäck und anderen von Personen mitgeführten Gegenständen beispielsweise auf Flughäfen eingesetzt.

Das Röntgenprüfgerät enthält eine Röntgenröhre 1, die im Ausführungsbeispiel bipolar mit einer positiven Hochspannungsquelle 2 und einer negativen Hochspannungsquelle 3 verbunden ist. Alternativ kann die Röntgenröhre 1 auch unipolar aufgebaut sein, so dass nur positive oder negative Hochspannung anliegt.

In einer Elektronik, bevorzugt in der Elektronik des Röntgengenerators, ist als Komponente ein Datenerfassungs- und -auswertesystem 4 integriert, beispielsweise ein Mikroprozessor. Das Datenerfassungs- und - auswertesystem 4 enthält einen Datenlogger mit Datenspeichern, der mit einer Messeinrichtung 5 für den Röhrenstrom, einer Messeinrichtung 6 für die positive Hochspannung, einer Messeinrichtung 7 für die negative Hochspannung und mit einer Temperaturmesseinrichtung 8 verbunden ist. Die von den Messeinrichtungen 5-8 ermittelten Werte werden in regelmäßigen, vorbestimmten Zeitabständen in dem Datenerfassungs- und -auswertesystem 4 gespeichert. Zusätzlich werden die Standby-Zeiten und die Betriebszeiten der Röntgenröhre 1 aufgezeichnet.

Die aufgezeichneten Daten werden in regelmäßigen Abständen ausgewertet. So können die vergangene Standby- und Betriebszeit, die aktuelle und aufakkumulierte thermische Belastung, sowie kurzfristige Signalabweichungen, die auf Überschläge hinweisen, direkt abgeleitet werden. Bevorzugt werden aus den Signalabweichungen die Anzahl und / oder die Rate von Überschlägen bestimmt.

Dies ermöglicht es, mit einer ausreichenden Anzahl von Messungen statistische Informationen für ein System mit vergleichbaren Komponenten zu erarbeiten. So kann die durchschnittliche Lebensdauer einer Röntgenröhre in Abhängigkeit von der Standby- und der Betriebszeit, die Verringerung der Lebensdauer durch thermische Belastung der Röhre, die Verringerung der Lebensdauer in Abhängigkeit von der Anzahl von Überschlägen und die Verringerung der Lebensdauer in Abhängigkeit von der Anzahl und der Häufigkeit von Überschlägen, insbesondere in einem kurzen Zeitraum, statistisch bestimmt werden.

Die so ermittelten statistischen Daten können in einem Datenerfassungs-und -auswertesystem 4 eines Röntgengenerators mit vergleichbaren Komponenten hinterlegt werden. So können ermittelte Werte des Generators mit den statistisch ausgewerteten Daten der Vergleichsmessungen verglichen werden, um die statistisch zu erwartende restliche Lebensdauer der Röntgenröhre 1 und weiterer kritischer Hochspannungskomponenten zu ermitteln. Umgekehrt lässt sich so eine Vorhersage über die Ausfallwahrscheinlichkeit des Röntgengenerators machen. Es ist so möglich, geeignete Vorsorgemaßnahmen rechtzeitig zu treffen, um die Ausfallzeit des Röntgenprüfgeräts möglichst kurz zu halten.

## Patentansprüche

1. Verfahren zur Vorhersage der Lebensdauer einer Röntgenröhre, wobei regelmäßig die Daten von zumindest einer die Lebensdauer der Röntgenröhre beeinflussenden physikalischen Größe gespeichert werden, wobei auch die vergangene Betriebszeit und / oder die vergangene Standby-Zeit der Röntgenröhre aufgezeichnet, in regelmäßigen Abständen ausgewertet und abgespeichert wird, und die gespeicherten Daten mittels einer hinterlegten Statistik ausgewertet werden, um die zu erwartende restliche Lebensdauer der Röntgenröhre zu bestimmen, und wobei die Verringerung der durchschnittlichen Lebensdauer zumindest durch thermische Belastung der Röntgenröhre statistisch bestimmt wird.

2. Verfahren nach Anspruch 1, **dadurch gekennzeichnet, dass** in einer Komponente der Generatorelektronik die Daten gespeichert werden und die Statistik hinterlegt ist.

3. Verfahren nach Anspruch 1 oder 2, **dadurch gekennzeichnet, dass** die Hochspannung, der Targetstrom und / oder die Temperatur der Röntgenröhre (1) erfasst und aufgezeichnet werden.

4. Verfahren nach einem der Ansprüche 1 bis 3, **dadurch gekennzeichnet, dass** die vergangenen Standby- und Betriebszeiten, die thermische Belastung der Röhre (1) und / oder kurzfristige Signalabweichungen aus den erfassten Daten direkt abgeleitet werden.

5. Verfahren nach Anspruch 4, **dadurch gekennzeichnet, dass** aus den Signalabweichungen die Anzahl und / oder die Rate von Überschlägen bestimmt wird.

6. Verfahren nach einem der Ansprüche 1 bis 5, **dadurch gekennzeichnet,** aus einer ausreichenden Anzahl von Beispielmessungen statistische Informationen erarbeitet werden, die hinterlegt werden und bei aktuellen Messungen zur Ermittlung der statistischen Restlebenserwartung der Röntgenröhre (1) und / oder sonstigen kritischen Komponenten des Generators verwendet werden.

7. Vorrichtung zur Durchführung eines Verfahrens nach einem der Patentansprüche 1 bis 6 mit einer Röntgenröhre (1) und einer Generatorelektronik, wobei die Generatorelektronik ein Datenerfassungs- und Auswertesystem (4) enthält, in dem die Daten von zumindest einer die Lebensdauer der Röntgenröhre beeinflussenden physikalischen Größe gespeichert werden und in dem die gespeicherten Daten mittels einer hinterlegten Statistik ausgewertet werden, um die zu erwartende restliche Lebensdauer der Röntgenröhre zu bestimmen.

8. Vorrichtung nach Anspruch 7, **dadurch gekennzeichnet, dass** das Datenerfassungs- und -auswertesystem (4) die Hochspannung der Röntgenröhre (1), den Targetstrom und / oder die Temperatur der Röntgenröhre (1) erfasst und aufzeichnet.

9. Vorrichtung nach einem der Ansprüche 7 oder 8, **dadurch gekennzeichnet, dass** das Datenerfassungs- und -auswertesystem (4) die Betriebszeit und / oder die Standby-Zeit der Röntgenröhre aufzeichnet.

## Claims

1. Method for predicting the lifetime of an x-ray tube, wherein the data from at least one physical variable influencing the lifetime of the x-ray tube are saved regularly, wherein the operating time that has passed and/or the standby time that has passed of the x-ray tube are/is also recorded, evaluated at regular intervals and saved, and the saved data are evaluated by means of a stored statistics system, in order to determine the expected remaining lifetime of the x-ray tube, and wherein the reduction of the average lifetime at least by thermal loading of the x-ray tube is determined statistically.

2. Method according to Claim 1, **characterized in that** the data are saved and the statistics system is stored in a component of the generator electronics system.

3. Method according to Claim 1 or 2, **characterized in that** the high voltage, the target current and/or the temperature of the x-ray tube (1) are detected and recorded.

4. Method according to one of Claims 1 to 3, **characterized in that** the standby and operating times that have passed, the thermal loading of the tube (1) and/or short-term signal deviations are derived directly from the detected data.

5. Method according to Claim 4, **characterized in that** the number and/or the rate of flashovers are/is determined from the signal deviations.

6. Method according to one of Claims 1 to 5, **characterized in that** statistical information is compiled from a sufficient number of exemplary measurements, said information being stored and used in present measurement processes for ascertaining the statistical remaining life expectancy of the x-ray tube (1) and/or other critical components of the generator.

7. Apparatus for carrying out a method according to one of Patent Claims 1 to 6 comprising an x-ray tube (1) and a generator electronics system, wherein the generator electronics system contains a data detection and evaluation system (4) in which the data from at least one physical variable influencing the lifetime of the x-ray tube are saved and in which the saved data are evaluated by means of a stored statistics system, in order to determine the expected remaining lifetime of the x-ray tube.

8. Apparatus according to Claim 7, **characterized in that** the data detection and evaluation system (4) detects and records the high voltage of the x-ray tube (1), the target current and/or the temperature of the x-ray tube (1).

9. Apparatus according to either of Claims 7 and 8, **characterized in that** the data detection and evaluation system (4) records the operating time and/or the standby time of the x-ray tube.

## Revendications

1. Procédé pour prédire la durée de vie d'un tube à rayons X, dans lequel les données d'au moins une variable physique influant sur la durée de vie du tube à rayons X sont sauvegardées régulièrement, le temps de fonctionnement passé et / ou le temps d'attente a passé du tube à rayons X sont également enregistrés, évalués à intervalles réguliers et enregistrés, et les données enregistrées sont évaluées au moyen d'un système de statistiques stockées, afin de déterminer la durée de vie restante attendue du tube à rayons X, et dans lequel la réduction de la durée de vie moyenne au moins par chargement thermique du tube à rayons X est déterminée statistiquement.

2. Procédé selon la revendication 1, **caractérisé en ce que** les données sont sauvegardées et le système de statistiques est stocké dans un composant du système électronique du générateur.

3. Procédé selon la revendication 1 ou 2, **caractérisé en ce que** la haute tension, le courant cible et / ou la température du tube à rayons X (1) sont détectés et enregistrés.

4. Procédé selon l'une des revendications 1 à 3, **caractérisé en ce que** les temps de veille et de fonctionnement passés, la sollicitation thermique du tube (1) et / ou les écarts de signal à court terme sont dérivés directement des données détectées.

5. Procédé selon la revendication 4, **caractérisé en ce que** le nombre et / ou le taux d'amorçages sont / sont déterminés à partir des écarts de signal.

6. Procédé selon l'une des revendications 1 à 5, **caractérisé en ce que** des informations statistiques sont compilées à partir d'un nombre suffisant de mesures exemplaires, ces informations étant stockées et utilisées dans les procédés de mesure actuels pour déterminer la durée de vie statistique restante du tube radiogène (1) et / ou d'autres composants critiques du générateur.

7. Dispositif de mise en oeuvre d'un procédé selon l'une des revendications 1 à 6 comprenant un tube à rayons X (1) et un système électronique générateur, dans lequel le système électronique du générateur contient un système de détection et d'évaluation de données (4) dans lequel les données d'au moins une variable physique influant sur la durée de vie du tube à rayons X sont sauvegardées et dans lesquelles les données sauvegardées sont évaluées au moyen d'un système de statistiques stockées, afin de déterminer la durée de vie restante attendue du tube à rayons X.

8. Appareil selon la revendication 7, **caractérisé en ce que** le système de détection et d'évaluation de données (4) détecte et enregistre la haute tension du tube à rayons X (1), le courant cible et / ou la température du tube à rayons X (1).

9. Dispositif selon l'une quelconque des revendications 7 et 8, **caractérisé en ce que** le système de détection et d'évaluation de données (4) enregistre le temps de fonctionnement et / ou le temps d'attente du tube à rayons X.
